# EUROPÄISCHE PATENTANMELDUNG

(11) **EP 1 619 074 A2**
(43) Veröffentlichungstag der Anmeldung: **25.01.2006**
(21) Anmeldenummer: 05015844.3
(22) Anmeldetag: 21.07.2005
(51) Int. Cl.: B60P 7/08

(54) **Vorrichtung zur Ladegutsicherung**

(30) Priorität: 23.07.2004 DE 102004035884
(71) Anmelder: DaimlerChrysler AG, 70567 Stuttgart (DE)
(72) Erfinder: Greiner, Ferdinand, 72218 Wildberg (DE); Sieber, Kai, 71154 Nufringen (DE)

(57) **Zusammenfassung**

Die Erfindung betrifft einen Kraftfahrzeugkofferraum (1) mit einem Ladeboden (2) und einer Ladegutsicherung (3). Die Ladegutsicherung weist ein Gurtschloss (4) und einen auf einer Gurtwickelvorrichtung (5) aufrollbaren Gurt (6) auf. Der Gurt (6) ist zur Sicherung des Ladeguts in das Gurtschloss (4) einrastbar.

Um einen konstruktiv einfachen Kraftfahrzeugkofferraum (1) mit einem Ladeboden (2) und einer Ladegutsicherung (3) zu schaffen, der möglichst vielseitig einsetzbar und benutzerfreundlich ist, weist die Gurtwickelvorrichtung (5) eine Fliehkraftsperre und eine Ratschenfunktion zum Spannen des Gurts (6) auf.

## Beschreibung

Die Erfindung betrifft einen Kraftfahrzeugkofferraum mit einem Ladeboden und einer Ladegutsicherung. Die Ladegutsicherung weist ein Gurtschloss und einen auf einer Gurtwickelvorrichtung aufrollbaren Gurt auf. Der Gurt ist zur Sicherung des Ladeguts in das Gurtschloss einrastbar.

Solch ein Kraftfahrzeugkofferraum mit einem Ladeboden und einer Ladegutsicherung ist allgemein bekannt.

So zeigt die DE 296 12 376 U1 einen Kraftfahrzeugkofferraum mit einer Einrichtung zum Sichern von Transportgut für einen Personenkraftwagen. Es ist dort eine Gurtwickelvorrichtung mit einer einem Gurt durch Aufrollen aufnehmenden und arretierbaren Spule vorgesehen.

Der Erfindung liegt die Aufgabe zu Grunde auf konstruktiv einfache Weise einen Kraftfahrzeugkofferraum mit einem Ladeboden und einer Ladegutsicherung zu schaffen, der möglichst vielseitig einsetzbar und benutzerfreundlich ist.

Erfindungsgemäß wird diese Aufgabe durch einen Kraftfahrzeugkofferraum mit den Merkmalen des Anspruchs 1 gelöst.

Ein Kraftfahrzeugkofferraum weist einen Ladeboden und eine Ladegutsicherung auf. Die Ladegutsicherung weist ein Gurtschloss und einen auf einer Gurtwickelvorrichtung aufrollbaren Gurt auf, wobei der Gurt zur Sicherung des Ladeguts in das Gurtschloss einrastbar ist. Die Gurtwickelvorrichtung weist eine Fliehkraftsperre und eine Ratschenfunktion zum Spannen des Gurts auf. Dies hat den Vorteil, dass im Kraftfahrzeugkofferraum angeordnete Gegenstände sicher und einfach durch die Ladegutsicherung gehaltert werden können. Durch die Fliehkraftsperre der Gurtwickelvorrichtung werden die Gegenstände auch im Falle eines Crash sicher gehaltert. Sie reagiert auf die bei einem Crash entstehenden Beschleunigungskräfte, sperrt den Gurt und verhindert so eine Bewegung der Gegenstände.
Die Ratschenfunktion ermöglicht ein Spannen des Gurtes, wodurch die Gegenstände in dem Kraftfahrzeugkofferraum sicher und einfach fixiert werden können. Der aufrollbare Gurt ermöglicht die Sicherung von unterschiedlich großen Gegenständen auch an verschiedenen Positionen im Kraftfahrzeugkofferraum.
Die Ladegutsicherung ermöglicht zwei Funktionen. Leichte Gegenstande können ohne die Ratschenfunktion gehaltert werden, da sobald größere Beschleunigungskräfte auftreten der Gurt durch die Fliehkraftsperre gesperrt wird. Schwere Gegenstände können auch bei Auftreten geringerer Beschleunigung sicher gehaltert werden, da durch die Ratschenfunktion ein Vorspannen möglich ist.

Bevorzugt ist die Ratschenfunktion über ein Betätigungselement aktivierbar. Hierdurch kann die Ratschenfunktion bei Gebrauch zugeschaltet werden.

Vorteilhaft ist auch, wenn der Kraftfahrzeugkofferraum ein Schienensystem aufweist, in dass eine Aufnahmevorrichtung integriert ist, in die eine an der Gurtwickelvorrichtung angeordnete Rastzunge lösbar einklickbar ist. Dies hat den Vorteil, dass die Gurtwickelvorrichtung bei Bedarf an der Aufnahmevorrichtung eingeklickt werden kann und bei Nichtgebrauch wieder entfernbar ist, und so nicht unnötig Laderaum beansprucht wird.

Bevorzugt weist der Gurt eine Rastzunge 11 auf, die in die Aufnahmevorrichtung lösbar einklickbar ist. Hierdurch wird eine größere Flexibilität erreicht.

Besonders vorteilhaft ist, wenn die Aufnahmevorrichtung in dem Schienensystem verschiebbar und an wahlweiser Position arretierbar ist. Hierdurch wird Flexibilität der Ladegutsicherung wesentlich erhöht. Es können so die Gegenstände im Kraftfahrzeugkofferraum an beliebiger Stelle fixiert werden. Die Arretierung der Aufnahmevorrichtung kann beispielsweise durch Klemmen oder Rastelemente erfolgen.

Eine weitere Ausführung sieht vor, dass die Gurtwickelvorrichtung eine Feder aufweist, die beim Ausziehen des Gurtes gespannt wird. Durch die hierdurch entstehende Federkraft wird bereits eine gewisse Fixierung der Gegenstände in dem Kraftfahrzeugkofferraum erreicht. Bei leichten Gegenständen reicht diese Kraft bereits zur Fixierung im Normalbetrieb aus.

Es ist auch vorgesehen, dass die Gurtwickelvorrichtung eine Sperre aufweist, die ein Aufwickeln des Gurtes durch die gespannte Feder verhindert. Hierdurch kann der Gurt auf eine beliebige Länge ausgezogen werden, ohne dass er sich beim Loslassen sofort wieder selbständig aufwickelt. Bei der Sperre kann es sich um eine Rücklaufsperre mit einer Art Freilauf handeln, d.h. ein Drehen einer Aufwicklung ist nur in eine Drehrichtung möglich, während die entgegengesetzte Drehrichtung gesperrt ist. Die Sperre kann beispielsweise über ein Betätigungselement wie die Ratschenfunktion aktiviert werden.

Es weiterhin vorgesehen, dass das Betätigungselement an einer Seitenfläche der Gurtwickelvorrichtung angeordnet ist und als manuell zu betätigender Drehknopf ausgebildet ist. Durch die Anordnung an der Seitenfläche kann das Betätigungselement schnell und benutzerfreundlich erreicht werden. Die Ausbildung als Drehknopf ermöglicht ein einfaches Vorspannen des Gurtes durch eine Drehbewegung.

Eine zusätzliche Möglichkeit ist, gemäß einer Weiterbildung, dass das Betätigungselement an seiner Stirnfläche einen Druckknopf aufweist, über den die Sperre lösbar ist, so dass die Feder den Gurt vorspannt. Hierdurch kann, nachdem beispielsweise der Gurt an dem zu sichernden Gegenstand angelegt ist, dieser schnell und benutzerfreundlich vorgespannt werden.

In einer Weiterbildung weist das Betätigungselement einen in dieses einschiebbaren Hebel zur besseren manuellen Bedienung auf. Durch Ausziehen des einschiebbaren Hebels wird die auf die Gurtwickelvorrichtung ausübbare Kraft erhöht, indem der manuell wirksame Hebelarm verlängert wird.

In den Figuren und der zugehörigen Beschreibung ist eine Ausführung der Erfindung dargestellt und erläutert,
dabei zeigen:
- Fig. 1: einen Teilbereich eines Kraftfahrzeugkofferraums,
- Fig. 2: eine Ladegutsicherung und
- Fig. 3: eine perspektivische Darstellung einer Gurtwickelvorrichtung.

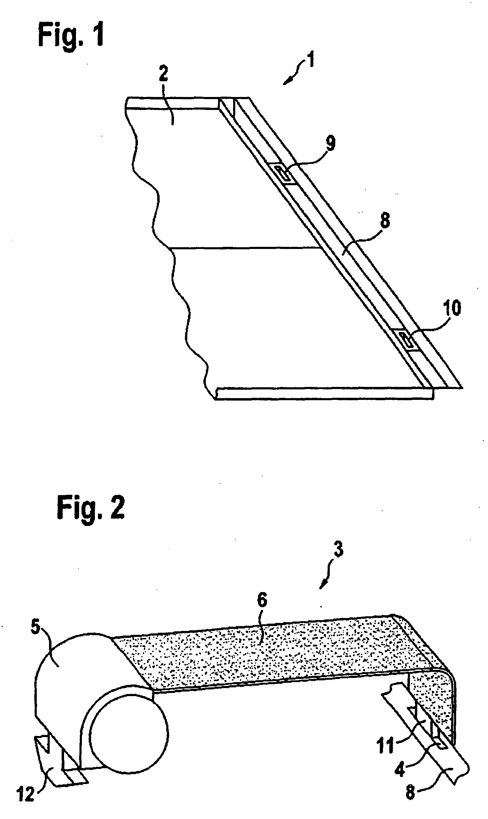

Figur 1 zeigt einen Ladeboden 2 eines Kraftfahrzeugkofferraums 1 mit einem Schienensystem 8 und darin integrierte Aufnahmevorrichtungen 9, 10. Die Aufnahmevorrichtungen 9, 10 sind entlang dem Schienensystem 8 verschiebbar und an beliebiger Position arretierbar. Das Schienensystem 8 weist eine mit dem Ladeboden 2 verbundene c-förmige Führungsschiene auf. Figur 1 zeigt nur einen rechten Teilausschnitt des Ladebodens 2 des Kraftfahrzeugkofferraums 1. Der linke Bereich des Ladebodens ist entsprechend dem rechten Teil ausgeführt. Der Ladeboden 2 selbst ist mit einem Stoff überzogen, der ein Verrutschen von dem Kraftfahrzeugkofferraum 1 gelagerten Gegenständen erschwert.

Figur 2 zeigt eine Ladegutsicherung 3. Die Ladegutsicherung 3 weist eine Gurtwickelvorrichtung 5 und einen Gurt 6 auf. An der Gurtwickelvorrichtung 5 und an dem Gurt 6 sind jeweils eine Rastzunge 11, 12 angeordnet. Der Gurt 6 ist in Figur 2 in teilweise abgerolltem Zustand dargestellt. Durch das Abrollen des Gurtes 6 wird eine in die Gurtwickelvorrichtung 5 integrierte Feder gespannt.

Die am einen Ende des Gurtes 6 angeordnete Rastzunge 11 ist in ein Gurtschloss 4, das in dem Schienensystem 8 integriert ist, eingesteckt. Die an der Gurtwickelvorrichtung 5 angeordnete Rastzunge 12 kann ebenfalls in die Aufnahmevorrichtungen 9, 10, die als Gurtschloss 4 ausgebildet sein können, eingesteckt werden. So kann beispielsweise die Rastzunge 12 der Gurtwickelvorrichtung 5 auf der linken Seite des Kraftfahrzeugkofferraums 1 eingesteckt werden. Der Gurt 6 kann nun aus der Gurtwickelvorrichtung 5 abgewickelt werden, an zu sichernde Gegenstände angelegt werden und mit der an dem Gurt 6 angeordneten Rastzunge durch Einstecken in das Gurtschloss 4 auf der anderen Seite des Kraftfahrzeugkofferraums 1 fixiert werden.

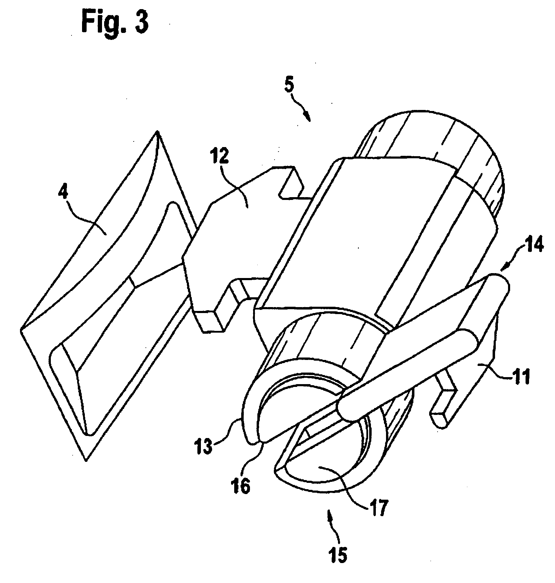

Figur 3 zeigt eine perspektivische Darstellung der Gurtwickelvorrichtung 5. An einer Seitenfläche der Gurtwickelvorrichtung 5 ist ein Betätigungselement, das als manuell zu betätigender Drehknopf 13 ausgebildet ist, angeordnet. Durch Drehen des Drehknopfes 13 wird der Gurt 6 aufgewickelt und dadurch gespannt. Ein in das Betätigungselement einschiebbarer Hebel 14 ist in Figur 3 in ausgezogenem Zustand dargestellt. Durch den Hebel 14 kann das zum Spannen des Gurtes 6 über den Drehknopf 13 erforderliche Drehmoment einfacher aufgebracht werden. In der Gurtwickelvorrichtung 5 ist eine Ratschenfunktion integriert, die die durch Drehen des Drehknopfs 15 und des Hebels 14 eingebrachte Vorspannung hält.
Das Betätigungselement weist des Weiteren an seiner Stirnfläche einen Druckknopf 15 auf. Dieser Druckknopf 15 ist in zwei Bereiche 16, 17 unterteilt. Durch Betätigung des ersten Bereichs 16 kann die Ratschenfunktion aktiviert bzw. gelöst werden. Durch Drücken des zweiten Bereichs 17 kann eine Sperre aktiviert und ein Aufrollen des Gurtes 6 aufgrund der Federkraft verhindert werden.
Eine in die Gurtwickelvorrichtung 5 integrierte Fliehkraftsperre ist folgendermaßen aufgebaut. Die Fliehkraftsperre weist in zueinander unterschiedlichen Richtungen bewegliche Elemente auf, die jeweils durch Federn gehaltert werden. Auftretende Beschleunigungskräfte wirken entgegen den Federkräften. Sobald die Beschleunigungskräfte einen vordefinierten Wert erreichen, wird mindestens eines der beweglichen Elemente durch sie in eine Position bewegt, in der es die Gurtwickelvorrichtung 5 sperrt. So wird ermöglich, dass der Gurt sich bei einem Crash nicht weiter abwickelt.

## Patentansprüche

1. Kraftfahrzeugkofferraum (1) mit einem Ladeboden (2) und einer Ladegutsicherung (3), wobei diese ein Gurtschloss (4) und einen auf einer Gurtwickelvorrichtung (5) aufrollbaren Gurt (6) aufweist und der Gurt (6) zur Sicherung des Ladeguts in das Gurtschloss (4) einrastbar ist,
**dadurch gekennzeichnet,**
**dass** die Gurtwickelvorrichtung (5) eine Fliehkraftsperre und eine Ratschenfunktion zum Spannen des Gurts (6) aufweist.

2. Kraftfahrzeugkofferraum nach Anspruch 1
**dadurch gekennzeichnet,**
**dass** die Ratschenfunktion über ein Betätigungselement (7) aktivierbar ist.

3. Kraftfahrzeugkofferraum nach Anspruch 1 oder 2
**dadurch gekennzeichnet,**
**dass** der Kraftfahrzeugkofferraum (1) ein Schienensystem (8) aufweist, in das eine Aufnahmevorrichtung (9, 10) integriert ist, in die eine an der Gurtwickelvorrichtung (5) angeordnete Rastzunge (12) lösbar einklickbar ist.

4. Kraftfahrzeugkofferraum nach Anspruch 3
**dadurch gekennzeichnet,**
**dass** der Gurt (6) eine Rastzunge (11) aufweist, die in die Aufnahmevorrichtung (9, 10) lösbar einklickbar ist.

5. Kraftfahrzeugkofferraum nach einem der vorhergehenden Ansprüche
**dadurch gekennzeichnet,**
**dass** die Aufnahmevorrichtung (9, 10) in dem Schienensystem (8) verschiebbar und an wahlweiser Position arretierbar ist.

6. Kraftfahrzeugkofferraum nach einem der vorhergehenden Ansprüche
**dadurch gekennzeichnet,**
**dass** die Gurtwickelvorrichtung (5) eine Feder aufweist, die beim Ausziehen des Gurts (6) gespannt wird.

7. Kraftfahrzeugkofferraum nach Anspruch 5
**dadurch gekennzeichnet,**
**dass** die Gurtwickelvorrichtung (5) eine Sperre aufweist, die ein Aufwickeln des Gurts (6) durch die gespannte Feder verhindert.

8. Kraftfahrzeugkofferraum nach einem der vorhergehenden Ansprüche
**dadurch gekennzeichnet,**
**dass** das Betätigungselement (7) an einer Seitenfläche der Gurtwickelvorrichtung (5) angeordnet ist und als manuell zu betätigender Drehknopf (13) ausgebildet ist.

9. Kraftfahrzeugkofferraum nach einem der vorhergehenden Ansprüche
**dadurch gekennzeichnet,**
**dass** das Betätigungselement (7) an seiner Stirnfläche einen Druckknopf (15) aufweist, über den die Sperre lösbar ist, so dass die Feder den Gurt vorspannt.

10. Kraftfahrzeugkofferraum nach einem der vorhergehenden Ansprüche
**dadurch gekennzeichnet,**
**dass** das Betätigungselement (7) ein in dieses einschiebbaren Hebel (14) zur besseren manuellen Bedienung aufweist.
